# FASCICULE DE BREVET EUROPEEN

(11) **EP 3 169 819 B1**
(45) Date de publication et mention de la délivrance du brevet: **12.09.2018**
(21) Numéro de dépôt: 15756963.3
(22) Date de dépôt: 10.07.2015
(51) Int. Cl.: C22B 7/00, C22B 21/00

(54) **PROCÉDÉ DE RECYCLAGE DE SCRAP D'ALLIAGES DE LA SÉRIE 2XXX OU 7XXX**
RECYCLING-VERFAHREN FÜR ALTMETALL VON LEGIERUNG DER 2XXX- ODER 7XXX-SERIE
METHOD FOR RECYCLING SCRAP OF 2XXX OR 7XXX SERIES ALLOYS

(30) Priorité: 16.07.2014 FR 1401590
(43) Date de publication de la demande: 24.05.2017
(73) Titulaire: Constellium Issoire, 63500 Issoire (FR)
(72) Inventeur: ARBAB, Alireza, 38140 Rives-sur-Fure (FR); BOISSONNET, Laurent, 38500 Voiron (FR); DIAWARA, Jules, Evans, West Virginia 25241 (US); HERVIEU, Pascal, 38140 Beaucroissant (FR); PICHAT, Anne, 385000 Saint-Cassien (FR)
(74) Mandataire: Constellium - Propriété Industrielle
(86) Numéro de dépôt international: PCT/FR2015/051926
(87) Numéro de publication internationale: WO 2016/009139

(56) Documents cités:
- FR-A1- 2 902 800
- US-A- 4 033 024
- US-A1- 2009 285 716
- ALEXANDER ARNOLD ET AL: "Recycling of Li-Containing Aluminum Alloys", LIGHT METAL AGE, FELLOM, SAN FRANCISCO, CA, US, vol. 69, no. 6, 1 décembre 2011 (2011-12-01), pages 32-37, XP009181118, ISSN: 0024-3345
- WILSON W R ET AL: "ALUMINIUM-LITHIUM AEROSPACE ALLOYS: A NEW CHALLENGE FOR RECYCLING", TRANSACTIONS - INSTITUTION OF MINING AND METALLURGY. SECTION C.MINERAL PROCESSING AND EXTRACTIVE METALLURGY, LONDON, GB, vol. 102, 1 janvier 1993 (1993-01-01), pages C44-C56, XP009067421, ISSN: 0371-9553

## Description

### Domaine de l'invention

L'invention concerne la fabrication de lingots en alliages d'aluminium de la série 2xxx ou 7xxx à partir de scrap (matières premières pour recyclage, telles que des copeaux ou chutes d'usinage) en alliage de la série correspondante. L'invention concerne particulièrement le recyclage du scrap issu des procédés de fabrication des industries aéronautique et spatiale.

### Etat de la technique

Dans plusieurs industries, les procédés de fabrication de produits métalliques finis par des procédés tels que l'usinage, la transformation, le découpage de produits intermédiaires génèrent des quantités importantes de copeaux et de chutes d'usinage. Dans le présent texte on désigne ces déchets par le terme « scrap » qui est utilisé dans la norme EN 12258-3, intitulée « Aluminium et alliages d'aluminium - Termes et définitions - Partie 3 : Scrap (matières premières pour recyclage) », pour désigner les produits pour recyclage (aluminium). Les industries aéronautiques et spatiales génèrent en particulier une quantité importante de scrap car de nombreuses pièces de structure et composants d'un aéronef sont obtenues par usinage intégral de pièces massives. Cependant, le scrap est souvent difficilement recyclable directement en raison du mélange avec d'autres alliages d'aluminium ou d'autres matériaux utilisés en aéronautique tels que les aciers inoxydables et le titane (Wilson et al. Journal de Physique C -75 1987). Les déchets d'usinage des alliages aéronautiques sont ainsi par exemple souvent recyclés dans des alliages aluminium-silicium destinés aux produits moulés. Cette voie de valorisation sera désignée dans la suite du texte par le terme « filière habituelle ». Elle conduit à une perte partielle de la valeur du métal et de plus ne pourra prochainement plus absorber l'ensemble du scrap issu de l'industrie aéronautique.

Il est également possible de fabriquer des produits en alliages d'aluminium destinés à des applications aéronautiques et spatiales à partir de scrap. Les brevets FR2801060 et FR2902800 décrivent ainsi la fabrication de produits et demi-produits en alliages de la série 2xxx ou de la série 7xxx à partir de matières premières pour recyclage tels que des copeaux ou des chutes d'usinage. Ce recyclage est rendu possible par une étape de purification de certaines impuretés. Cette voie de valorisation sera désignée dans la suite du texte par le terme de « filière aéronautique ».

Le problème du recyclage du scrap est particulièrement sensible pour les alliages 2xxx ou 7xxx de type Al-Li. On entend ici par « alliage 2xxx ou 7xxx de type Al-Li » tout alliage 2xxx ou 7xxx contenant une quantité de lithium supérieure à 0,2 % en poids et de préférence supérieure à 0,5 % en poids. Le point commun de ces alliages est la nécessité de précautions particulières liées à l'oxydabilité du lithium. Les alliages d'aluminium contenant du lithium ont une densité plus faible que les alliages d'aluminium traditionnels et sont, à ce titre, très prometteurs pour réduire le poids des pièces aéronautiques. Cependant, les alliages 2xxx ou 7xxx de type Al-Li sont significativement plus chers que les produits en alliages ne contenant pas de lithium, pour trois raisons : le coût intrinsèque du lithium, le coût de l'élaboration du métal en fonderie et la difficulté de recycler le scrap.

Il est, en effet, connu que le recyclage du scrap des alliages de type Al-Li dans la « filière aéronautique » est difficile (Wilson et al. Journal de Physique C -75 1987).

La demande internationale WO2007/015013 enseigne un procédé de fusion de scrap en alliage d'aluminium contenant du lithium dans lequel notamment on charge le scrap sur un lit initial de métal liquide de façon à créer à la surface du lit de métal liquide un matelas flottant d'épaisseur contrôlée qui permet de minimiser l'utilisation de consommables onéreux tels que du gaz inerte.

Il a été constaté que les procédés connus ne permettent pas toujours de recycler les lingots obtenus par refusion dans la « filière aéronautique » en raison notamment de l'augmentation de la teneur de certains éléments alcalins tels que le sodium ou alcalino-terreux tels que le calcium ou même de certains métaux comme le fer. Il est connu de l'homme du métier d'éliminer les éléments alcalins ou alcalino-terreux lors de la coulée de l'aluminium par un procédé de chloration dans une poche appropriée. Cependant il est avantageux notamment en raison de contraintes liées à l'utilisation du chlore pour la sécurité et environnement de ne pas utiliser ce gaz en fonderie et, de plus, dans le cas des alliages 2xxx ou 7xxx de type Al-Li ce procédé a l'inconvénient d'éliminer également une grande partie du lithium et donc de ne pas être économiquement avantageux.

Le problème que la présente invention cherche à résoudre est donc de proposer une nouvelle approche de fabrication de lingots en alliages d'aluminium de la série 2xxx ou 7xxx permettant d'incorporer une fraction significative de scrap finement divisé tout en obtenant une faible teneur en impuretés indésirables telles que notamment les éléments alcalins comme le sodium, les éléments alcalino-terreux comme le calcium ou certains métaux comme le fer.

### Objet de l'invention

Un premier objet de l'invention est un procédé de fabrication de lingot en alliage d'aluminium utilisant du scrap en alliage d'aluminium de la série 2xxx ou 7xxx dans lequel
(i) on approvisionne du scrap en alliage d'aluminium de la série 2xxx ou 7xxx;
(ii) optionnellement on effectue une séparation de l'huile présente sur le scrap,
(iii) on réalise une première opération de traitement dudit scrap par un premier liquide à une température d'au moins 10 °C, ledit premier liquide étant une solution aqueuse de pH 1 à 5 ou 8 à 13,
(iv) on sépare le premier liquide et le scrap ainsi traité,
(v) on réalise au moins une seconde opération de traitement dudit scrap par un second liquide,
(vi) on sépare le second liquide et le scrap ainsi traité,
(vii) on fait fondre ledit scrap ainsi obtenu,
(viii) optionnellement on réalise une première solidification dans une forme brute intermédiaire,
(ix) on coule un lingot en alliage d'aluminium de la série du scrap utilisé.

Un autre objet de l'invention est un procédé de fabrication d'un élément de structure aéronautique comprenant, outre les étapes du procédé ci-dessus, au moins une étape de laminage, filage et/ou forgeage dudit lingot en alliage d'aluminium de la série du scrap utilisé, ledit élément de structure aéronautique étant choisi parmi les éléments qui composent le fuselage, tels que la peau de fuselage, les raidisseurs ou lisses de fuselage, les cloisons étanches, les cadres de fuselage, les ailes, tels que la peau de voilure, les raidisseurs, les nervures et longerons et l'empennage composé notamment de stabilisateurs horizontaux et verticaux, ainsi que les profilés de plancher, les rails de sièges et les portes.

### Description des figures

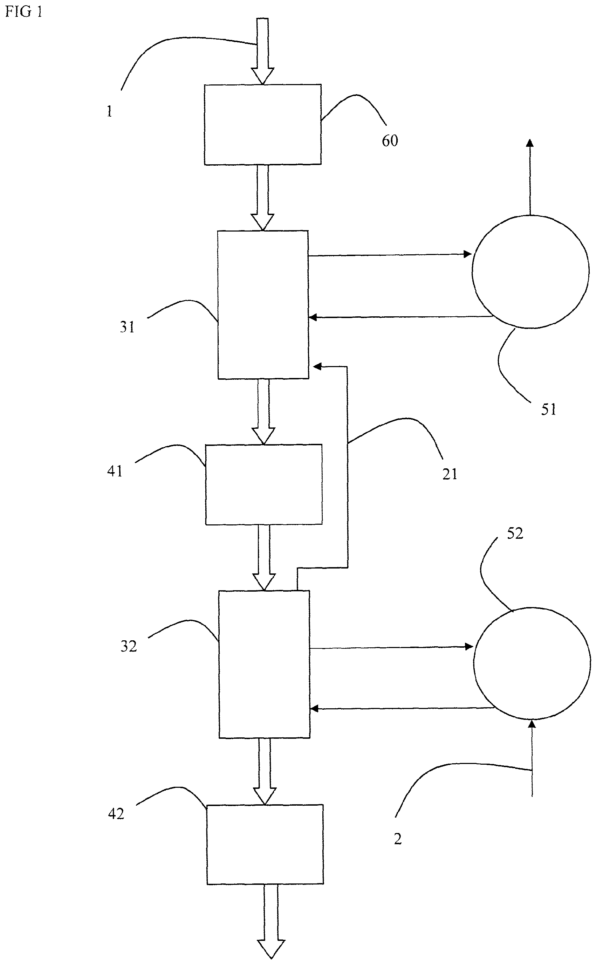

Figure 1 : Schéma d'une ligne de traitement de scrap selon l'invention.

### Description de l'invention

Sauf mention contraire, toutes les indications relatives à la composition chimique des alliages sont exprimées en pourcent massique. Par conséquent, dans une expression mathématique, « 0,4 Li » signifie : 0,4 fois la teneur en lithium, exprimée en pourcent massique ; cela s'applique mutatis mutandis aux autres éléments chimiques. La désignation des alliages suit les règles de The Aluminum Association, connues de l'homme du métier.
Sauf mention contraire, les définitions de la norme européenne EN 12258-1 s'appliquent. Les termes liés au scrap et son recyclage sont décrits dans la norme EN12258-3.

Le terme « usinage » comprend tout procédé d'enlèvement de matière tel que le tournage, le fraisage, le perçage, l'alésage, le taraudage, l'électroérosion, la rectification, le polissage.

Le scrap susceptible d'être recyclé par le procédé selon la présente invention peut se présenter sous différentes formes, mais comprend préférentiellement du scrap finement divisé, c'est à dire de scrap constitué d'éléments dont la section est inférieure à 50 mm². L'une des formes particulièrement préférée est référencée sous le vocable « tournures » dans la norme EN12258-3, ce qui désigne le scrap de production composé de grains, de copeaux, de frisons, produits par usinage ou autres opérations. Le scrap pouvant être recyclé dans le cadre de l'invention peut se présenter dans différents états : principalement scrap en vrac et scrap broyé, le scrap en granules pouvant éventuellement convenir dans les cas où les pièces le composant sont d'une taille suffisamment petite. Les caractéristiques dimensionnelles du scrap sont importantes pour la réalisation de la présente invention. Si le scrap est approvisionné sous forme compactée, une étape de décompactage s'avère le plus souvent nécessaire.

Le scrap utilisable dans le cadre de la présente invention est également caractérisé par sa masse volumique. La masse volumique apparente du scrap est mesurée de la façon suivante : un récipient cylindrique d'une capacité de 1 litre est rempli de scrap, une vibration est produite sous la forme de petits chocs de façon à tasser le scrap. L'opération est répétée jusqu'à ce que le récipient soit rempli à raz bord. Le poids du récipient rempli auquel est soustrait le poids du récipient vide permet de déterminer la masse volumique apparente du scrap. Il est préférable que la masse volumique apparente du scrap soit comprise entre 0,05 et 0,8 t/m³ (tonne par mètre cube), préférentiellement 0,1 à 0,7 t/m³ et de façon encore plus avantageuse entre 0,2 à 0,4 t/m³.

Les présents inventeurs ont constaté que la composition chimique des lingots obtenus après fusion du scrap peut être significativement améliorée quand le scrap subit une première opération de traitement par un premier liquide à une température d'au moins 10 °C, ledit premier liquide étant une solution aqueuse acide ou basique, de pH 1 à 5 ou 8 à 13 respectivement, suivie par au moins une seconde opération de traitement par un second liquide. Avantageusement, le premier liquide est acide, et son pH est compris entre 1 et 5, de préférence entre 2 et 4 et de manière préférée entre 2 et 3. Des acides minéraux, tels que notamment l'acide phosphorique, l'acide sulfurique ou l'acide nitrique ou des acides organiques tels que notamment l'acide acétique, l'acide citrique, l'acide sulfamique, peuvent être utilisés seuls ou en combinaison de façon à obtenir la solution aqueuse acide souhaitée. De préférence, le premier liquide contient de l'acide phosphorique. Le traitement par un premier liquide acide est plus efficace pour l'élimination des impuretés indésirables qu'un traitement par un premier liquide basique. Dans le cas d'un premier liquide basique, on peut utiliser des bases organiques, des produits à base d'ammoniaque et/ou des bases minérales, notamment des sels alcalins tels que la soude ou la potasse, alcalino-terreux, tels que la chaux, sont typiquement utilisés. Des sels contenant des silicates sont avantageux. La température de traitement par le premier liquide est avantageusement comprise entre 20 et 80 °C.

En général, le scrap est recouvert de lubrifiants qui peuvent être des émulsions ou des huiles entières et qui sont généralisés ici par le terme « huile ». La quantité d'huile présente sur le scrap varie en fonction de l'étape de fabrication au cours de laquelle il est généré et de la technologie utilisée pour l'enlèvement du métal. Ainsi la quantité d'huile présente sur le scrap obtenu lors de l'opération de scalpage des plaques de laminage est généralement faible. En revanche, la quantité d'huile présente sur le scrap provenant d'opérations d'usinage est beaucoup plus élevée.

Les présents inventeurs ont constaté qu'un dégraissage du scrap à l'aide d'un détergent seul, c'est-à-dire un produit comprenant au moins un composé chimique doté de propriétés tensioactives aussi appelé produit tensioactif ou tensioactif, ne permet pas de réduire de façon significative la teneur en impuretés indésirables après recyclage. Une étape préalable de séparation de l'huile, typiquement par égouttage ou centrifugation ou par traitement avec un solvant organique ou un détergent de pH neutre avant la première opération de traitement avec la première solution aqueuse acide ou basique peut cependant s'avérer avantageuse pour éviter une trop forte pollution en huile du premier liquide lors de la première opération de traitement.

De façon avantageuse, le premier liquide comprend au moins un produit tensioactif. De préférence, le produit tensioactif est un produit tensioactif non ionique car ces produits permettent de diminuer encore la teneur en impuretés indésirables. Parmi les produits tensioactifs non ioniques appropriés on peut citer les produits à liaison ester R-CO-O-R', où typiquement R est une chaine non polaire et R' une chaine polaire, tels que les esters de glycol, par exemple le stéarate d'éthylène glycol, les esters de glycérol, par exemple le stéarate de glycérol, les esters de polyoxyethylèneglycol, les esters de sorbitane, et les esters de sorbitane polyoxyéthyléniques, plus couramment appelés Tweens ou polysorbates, les esters de sucre, les tensioactifs à liaison éther R-O-R', où typiquement R est une chaine non polaire et R' une chaine polaire, tels que les éthers d'alcools gras et de polyoxyéthylèneglycol, par exemple le Triton®X100 de formule C₈H₁₇C₆H₄(OC₂H₄)₉₋₁₀OH), les tensioactifs à liaison amide R-CO-NH-R', où typiquement R est une chaine non polaire et R' une chaine polaire.

La durée de la première opération de traitement dépend des conditions de brassage et du rapport entre la quantité de scrap traité et de solution de traitement. Typiquement la durée de traitement est comprise entre quelques minutes et quelques dizaines de minutes. On peut réaliser ladite première opération de façon discontinue, par lots, ou de façon continue. Avantageusement, ladite première opération est réalisée en alimentant le scrap de façon continue.

De manière avantageuse, on réalise pendant ladite première opération de traitement un traitement simultané avec des ultrasons, à une fréquence typiquement comprise entre 10 kHz et 100 kHz et de préférence entre 15 kHz et 35 kHz.

Après ladite première opération de traitement on sépare le scrap ainsi traité dudit premier liquide, avantageusement de façon à ce que la quantité résiduelle de liquide ne dépasse pas 50% en poids, de préférence 20% en poids et de manière préférée 10% en poids de la matière transférée de la première opération à la deuxième opération. La matière transférée est constituée du scrap transféré et du liquide entrainé. La dite séparation peut être effectuée par au moins un moyen tel que par exemple décantation, filtration, égouttage, centrifugation et/ou soufflage. Avantageusement, ladite séparation est effectuée par centrifugation de façon à ce que la quantité résiduelle de liquide ne dépasse pas 10% en poids de la matière transférée de la première opération à la deuxième opération.

Le scrap ainsi séparé subit ensuite une seconde opération de traitement par un second liquide.

Dans un mode de réalisation de l'invention ladite seconde opération de traitement est un rinçage et ledit second liquide comprend essentiellement de l'eau, avantageusement le second liquide dans ce mode de réalisation est de l'eau déionisée. Dans un autre mode de réalisation de l'invention ledit second liquide est une solution aqueuse dont le pH est supérieur au pH du premier liquide, si le premier liquide a un pH compris entre 1 et 5 et inférieur au pH du premier liquide si le premier liquide a un pH compris entre 8 et 13, avantageusement le pH du second liquide étant compris entre le pH du premier liquide et 7. Dans tous les cas il est avantageux d'ajouter dans ledit second liquide au moins un tensioactif, de préférence un tensioactif non ionique du type de ceux décrits comme additifs possibles au premier liquide.

De manière avantageuse, on réalise pendant ladite seconde opération de traitement un traitement simultané avec des ultrasons, à une fréquence typiquement comprise entre 10 kHz et 100 kHz et de préférence entre 15 et 35 kHz.

D'autres étapes de traitement par d'autres liquides peuvent être ajoutées entre ladite première opération de traitement et ladite seconde opération de traitement ou après la dite seconde opération de traitement. Entre chaque étape de traitement on sépare le scrap ainsi traité du liquide de traitement, de préférence de façon à ce que la quantité résiduelle de liquide ne dépasse pas 50% en poids, de préférence 20% en poids et de manière préférée 10% en poids de la matière transférée, avantageusement par centrifugation. De façon avantageuse le procédé ne comprend que la première et la seconde opération de traitement. Dans un autre mode de réalisation, le procédé comprend, à la suite de la première et de la seconde opération, une troisième opération, préférentiellement cette troisième opération est de type rinçage.

Après la dernière opération de traitement par un dernier liquide on sépare le dernier liquide de traitement et le scrap, avantageusement de façon à ce que la quantité résiduelle de liquide ne dépasse pas 3% en poids, de préférence par centrifugation, et/ou on sèche le scrap par traitement thermique dans un four à une température typiquement comprise entre 60 et 350°C, préférentiellement entre 80 et 300°C et, plus préférentiellement encore, entre 105 et 130 °C. De manière avantageuse on réalise une centrifugation et un séchage de façon à ce que la quantité résiduelle de liquide ne dépasse pas 0,05% en poids.

Préférentiellement, les opérations de traitement du scrap sont réalisées en continu et les liquides de traitement circulent en flux opposé à celui du scrap. Avantageusement, ledit second liquide alimente ledit premier liquide préférentiellement avec un débit volumique d'au moins 0,1 fois le débit volumique d'alimentation du scrap et préférentiellement compris entre 0,2 et 1 fois, de manière préférée 0,3 et 0,8 fois le débit volumique d'alimentation du scrap et la quantité de premier liquide entrainée ne dépasse pas 50 % en poids de préférence 20% en poids et de manière préférée 10% en poids de la matière transférée, typiquement grâce à une centrifugation après la première opération de traitement.

La figure 1 illustre un mode de réalisation en continu du procédé selon l'invention. Le flux de scrap est représenté par les flèches doubles (1) et le flux de liquide est représenté par les flèches simples (2, 21). Le flux de liquide est opposé au flux de scrap. Le scrap est approvisionné et subit une étape de séparation d'huile dans un dispositif approprié (60). Le scrap subit ensuite la première opération de traitement avec le premier liquide dans le dispositif (31), une séparation du premier liquide dans le dispositif (41), la seconde opération de traitement avec le second liquide dans le dispositif (32), une séparation du second liquide dans le dispositif (42), puis est séché et refondu. Le premier liquide est stocké et éventuellement retraité et/ou stabilisé dans la première cuve (51) qui alimente le dispositif (31). Le second liquide est stocké et éventuellement retraité dans la seconde cuve (52) qui alimente le dispositif (32). Le second liquide alimente le premier liquide (21).

Le scrap susceptible d'être recyclé dans le cadre de la présente invention est essentiellement constitué d'alliages de la série 2xxx ou de la série 7xxx, ces alliages ne devant typiquement pas être mélangés. Parmi les alliages de la série 2xxx ou 7xxx ne contenant pas de lithium, les alliages qui conviennent sont par exemple les alliages AA2X24, AA2026, AA2027, AA2029, AA2139, AA2056, AA7010, AA7X40, AA7X49, AA7X50, AA7X55, AA7X75, AA7X81, AA7X85. Avantageusement, le scrap susceptible d'être recyclé dans le cadre de la présente invention est essentiellement constitué d'alliages 2xxx de type Al-Li convenablement triés. Les alliages qui conviennent sont par exemple les alliages AA2050, AA2055, AA2060, AA2065, AA2070, AA2076, AA2090, AA2091, AA2094, AA2095, AA2097, AA2098, AA2099, AA2195, AA2196, AA2197, AA2198, AA2199, AA2295, AA2296, AA2297, AA2397, tels que définis par l'Aluminum Association. La présente invention permet de réaliser des lingots utilisables dans l'industrie aéronautique dans ces alliages à partir de scrap.

Le procédé selon l'invention peut également comprendre une étape destinée à réduire la quantité de déchets ferreux massifs, notamment un système de tri magnétique permettant d'éliminer des éléments ferreux tels que des vis ou boulons ayant pu contaminer le scrap. Un procédé magnétique d'élimination des éléments ferreux peut également être appliqué lors des opérations de traitement du procédé selon l'invention, en particulier lors de la première opération de traitement, un tel procédé permettant d'éliminer en particulier les particules ferreuses.

Le scrap ainsi séché est ensuite fondu. Un procédé de fusion tel que décrit dans la demande WO2007/015013 dans lequel on charge le scrap sur un lit initial de métal liquide de façon à créer à la surface du lit de métal liquide un matelas flottant d'épaisseur contrôlée est avantageux. Dans un autre mode de réalisation de l'invention, le scrap est introduit dans un four dans lequel on crée un mouvement tourbillonnaire de façon à réaliser une immersion rapide. Dans un mode de réalisation avantageux de l'invention le scrap issu du traitement par le premier et le second liquide est compacté pour être introduit dans un four de fusion à partir duquel est coulé un lingot directement utilisable pour du laminage, du forgeage et/ou du filage.

Le scrap ainsi fondu est enfin coulé sous la forme d'un lingot en alliage de la série du scrap utilisé, c'est-à-dire de la série 2xxx si le scrap utilisé est de la série 2xxx et de la série 7xxx si le scrap utilisé est de la série 7xxx. Le lingot peut être coulé directement ou après une première solidification dans une forme brute intermédiaire non utilisable pour la déformation ultérieure telle qu'un « bol » ou un « sow ». Avantageusement, la part de métal du lingot issue de la fusion du scrap est au moins égale à 5 % en poids, de préférence au moins égale à 15 % en poids et de manière préférée au moins égale à 25 % en poids. Le reste provient d'autres produits à base d'aluminium et des éléments d'alliages ajoutés pour corriger le titre du métal. Lesdits autres produits à base d'aluminium sont typiquement, d'une part, des produits recyclés de grande dimension, tels que des chutes en alliage de la série 2xxx ou 7xxx dont la composition est connue, et d'autre part des produits en aluminium dit "neuf", c'est-à-dire en aluminium dit "pur" ou faiblement allié contenant typiquement plus de 99,8 % d'aluminium.

Le lingot ainsi obtenu peut être utilisé dans l'industrie aéronautique. Ainsi le lingot peut être une plaque de laminage, qui après laminage sera transformée typiquement sous forme de tôle mince ou de tôle épaisse, ou une billette de filage qui après extrusion sera transformée sous forme de profilé ou une ébauche de forge qui après forgeage sera transformée en produit forgé, ces tôles, profilés et produits forgés pouvant être utilisés pour la fabrication d'éléments de structure aéronautique tels que les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

### Exemples

### Exemple 1

Dans cet exemple, on a étudié différentes solutions pour traiter du scrap en alliage 2xxx de type Al-Li.

On a approvisionné du scrap provenant d'usinage d'alliage AA2050. La composition mesurée en Cu, Li, Mg, Ag, Ca et Na après fusion est donnée dans le tableau 1

**Tableau 1 . Composition en Cu, Li, Mg, Ag, Ca et Na du scrap (% en poids pour Cu, Li, Mg, Ag ou ppm pour Ca et Na)**

| Cu | Li | Mg | Ag | Ca | Na |
|---|---|---|---|---|---|
| 3,5 | 0,8 | 0,3 | 0,4 | 51 | 18 |

500 g de scrap a été traité pendant 10 minutes par 4 litres d'un premier liquide dont la composition est donnée dans le tableau 2, rincé avec de l'eau déionisée puis séché dans une étuve à 105 °C pendant environ 3 heures.

**Tableau 2 . Conditions de traitement**

| Traitement | pH | Température | Tensio-actif | Composant principal - concentration |
|---|---|---|---|---|
| 1 | 11,7 | 50°C | Alcool gras C13-15 éthoxylé | Pyrophosphate de tétrasodium et tétraborate de disodium anhydre (15g/l) |
| 2 | 7 | 50°C | C₈H₁₇C₆H₄(OC₂H₄)₉₋₁₀OH (1g/l) | |
| 3 | 2 | 16 °C | | Acide nitrique (1g/l) |
| 4 | 3 | 16 °C | | Acide acétique (20g/l) |

Le scrap a ensuite été fondu et coulé. La composition en Cu, Li, Mg, Ag, Ca et Na obtenue est donnée dans le Tableau 3.

**Tableau 3 . Composition en Cu, Li, Mg, Ag, Ca et Na du scrap obtenue après traitement et fusion (% en poids pour Cu, Li, Mg, Ag ou ppm pour Ca et Na)**

| Traitement | Cu | Li | Mg | Ag | Ca | Na |
|---|---|---|---|---|---|---|
| 1 | 3,3 | 0,8 | 0,3 | 0,4 | 25 | 17 |
| 2 | 3,4 | 0,7 | 0,3 | 0,4 | 49 | 10 |
| 3 | 3,6 | 0,8 | 0,3 | 0,4 | 27 | 10 |
| 4 | 3,6 | 0,8 | 0,4 | 0,3 | 25 | 8 |

Les traitements 1, 3 et 4 selon l'invention permettent d'obtenir une composition après coulée utilisable dans un lingot en alliage AA2050, la teneur en calcium étant 50% plus faible que celle du scrap initial. Les traitements 3 et 4 sont particulièrement avantageux car la teneur en sodium est également faible.

### Exemple 2 :

Dans cet exemple, on a étudié d'autres liquides pour traiter un autre lot de scrap en alliage 2xxx de type Al-Li dont la composition en Cu, Li, Mg, Ag, Ca et Na est donnée dans le Tableau 4.

**Tableau 4. Composition en Cu, Li, Mg, Ag, Ca et Na du scrap (% en poids pour Cu, Li, Mg, Ag ou ppm pour Ca et Na)***

| Cu | Li | Mg | Ag | Ca | Na |
|---|---|---|---|---|---|
| 3,6 | 0,8 | 0,3 | 0,4 | 45 | 130 |

| | | | | | |
|---|---|---|---|---|---|
| * la teneur en Ca et Na est mesurée en surface et la teneur présente dans le métal est ajoutée | | | | | |

500 g scrap a été traité pendant 30 mn dans 4 litres d'un des liquides dont la composition est donnée dans le tableau 5, rincé avec de l'eau déionisée puis séché dans une étuve à 105 °C pendant environ 3 heures.

**Tableau 5 . Conditions de traitement**

| Traitement | pH | Température | Tensio-actif | Composant principal - concentration |
|---|---|---|---|---|
| 5 | 2 | 20°C | C₈H₁₇C₆H₄(OC₂H₄)₉₋₁₀OH (1g/l) | H₃PO₄ (5 g/l) |
| 6 | 2,2 | 20°C | | H₃PO₄ (1 g/l) |
| 7 | 1 | 20 °C | | HNO₃ (5 g/l) |
| 8 | 2,6 | 20 °C | | CH₃COOH (20 g/l) |
| 9 | 7 | 50°C | C₈H₁₇C₆H₄(OC₂H₄)₉₋₁₀OH (1g/l) | |
| 10* | 7 | 50°C | C₈H₁₇C₆H₄(OC₂H₄)₉₋₁₀OH (1g/l) | |
| 11* | 7 | 50°C | | |

| | | | | |
|---|---|---|---|---|
| * en présence d'ultrasons | | | | |

La quantité de calcium restant dans le scrap après le traitement a été calculée en additionnant la quantité présente dans le métal et la quantité extractible. Les résultats sont donnés dans le Tableau 6.

**Tableau 6 . Composition en Cu, Li, Mg, Ag, Ca et Na du scrap après traitement, (% en poids pour Cu, Li, Mg, Ag ou ppm pour Ca et Na)***

| Traitement | Cu | Li | Mg | Ag | Ca | Na |
|---|---|---|---|---|---|---|
| 5 | 3,6 | 0,8 | 0,4 | 0,4 | 20 | 2 |
| 6 | 3,6 | 0,8 | 0,4 | 0,4 | 23 | 15 |
| 7 | 3,6 | 0,8 | 0,3 | 0,4 | 21 | 12 |
| 8 | 3,6 | 0,8 | 0,4 | 0,4 | 23 | 2 |
| 9 | 3,6 | 0,8 | 0,4 | 0,4 | 38 | 42 |
| 10 | 3,6 | 0,8 | 0,4 | 0,4 | 40 | 42 |
| 11 | 3,6 | 0,8 | 0,3 | 0,4 | 46 | 42 |

| | | | | | | |
|---|---|---|---|---|---|---|
| * la teneur en Ca et Na est mesurée en surface et la teneur présente dans le métal est ajoutée. | | | | | | |

Les traitements 5 à 8 selon l'invention permettent d'obtenir une composition après coulée utilisable dans un lingot en alliage AA2050 car la teneur en Ca et Na est au moins 50 % plus faible que celle du scrap initial, le traitement 5 étant particulièrement avantageux.

### Exemple 3

Dans cet exemple on a traité en continu du scrap en alliage 2xxx de type Al-Li dont la composition en Cu, Li, Mg, Ag, Ca et Na est donnée dans le Tableau 7. Le temps de séjour du scrap dans le premier et le second liquide était d'environ 5 minutes.

**Tableau 7 . Composition en Cu, Li, Mg, Ag, Ca et Na du scrap (% en poids pour Cu, Li, Mg, Ag ou ppm pour Ca et Na)***

| Cu | Li | Mg | Ag | Ca | Na |
|---|---|---|---|---|---|
| 3,6 | 0,8 | 0,3 | 0,4 | 85 | 63 |

| | | | | | |
|---|---|---|---|---|---|
| * la teneur en Ca et Na est mesurée en surface et la teneur présente dans le métal est ajoutée | | | | | |

Le lot de scrap a été traité par un premier liquide dont la composition est donnée dans le Tableau 8, centrifugé, rincé avec de l'eau déionisée et centrifugé à nouveau.

**Tableau 8 . Conditions de traitement**

| pH | Température | Tensio-actif | Composant principal-concentration |
|---|---|---|---|
| 2-2,5 | 50 °C | C₈H₁₇C₆H4(OC₂H₄)₉₋₁₀OH (1g/l) | H₃PO₄ (5 g/l) |

Le Tableau 9 donne pour diverses conditions de traitement la teneur en calcium du scrap.

**Tableau 9 . Effet des paramètres de traitement sur la composition du scrap**

| Traitement | séparation du liquide après la première opération de traitement | % en poids de liquide dans la matière transférée de la première à la seconde opération (% en poids) | Rapport entre le débit volumique d'alimentation du premier liquide par le second liquide et le débit volumique de scrap | Ca (ppm)* |
|---|---|---|---|---|
| 12 | Centrifugation | 7% | 0,5 | 22 |
| 13 | Centrifugation | 7% | 0,25 | 25 |
| 14 | Centrifugation | 7% | 0,1 | 73 |
| 15 | Centrifugation | 7% | 1 | 21 |
| 16 | Egouttage | 74% | 0,5 | 28 |
| 17 | Egouttage | 74% | 0,25 | 74 |

| | | | | |
|---|---|---|---|---|
| * la teneur en Ca est mesurée en surface et la teneur présente dans le métal est ajoutée. | | | | |

L'essai 12 permet d'atteindre un compromis particulièrement avantageux entre la teneur en calcium et la consommation de liquide.

## Revendications

1. Procédé de fabrication de lingot en alliage d'aluminium utilisant du scrap en alliage d'aluminium de la série 2xxx ou 7xxx dans lequel
(i) on approvisionne du scrap en alliage d'aluminium de la série 2xxx ou 7xxx;
(ii) optionnellement on effectue une séparation de l'huile présente sur le scrap,
(iii) on réalise une première opération de traitement dudit scrap par un premier liquide à une température d'au moins 10 °C, ledit premier liquide étant une solution aqueuse de pH 1 à 5 ou 8 à 13,
(iv) on sépare le premier liquide et le scrap ainsi traité,
(v) on réalise au moins une seconde opération de traitement dudit scrap par un second liquide,
(vi) on sépare le second liquide et le scrap ainsi traité,
(vii) on fait fondre ledit scrap ainsi obtenu,
(viii) optionnellement on réalise une première solidification dans une forme brute intermédiaire,
(ix) on coule un lingot en alliage d'aluminium de la série du scrap utilisé.

2. Procédé selon la revendication 1, dans lequel le pH dudit premier liquide est compris entre 2 et 4.

3. Procédé selon la revendication 1 ou la revendication 2 dans lequel ledit premier liquide contient de l'acide phosphorique.

4. Procédé selon une quelconque des revendications 1 à 3, dans lequel ledit premier liquide comprend au moins un produit tensioactif non ionique.

5. Procédé selon la revendication 4 dans lequel ledit produit tensioactif non ionique est choisi parmi un produit à liaison ester, un produit à liaison éther et/ou un produit à liaison amide.

6. Procédé selon une quelconque des revendications 1 à 5 dans lequel un traitement avec des ultrasons à une fréquence typiquement comprise entre 10 kHz et 100 kHz et de préférence entre 15 kHz et 35 kHz est réalisé pendant ladite première opération de traitement et/ou pendant ladite seconde opération de traitement.

7. Procédé selon une quelconque des revendications 1 à 6 dans lequel, après la dernière opération de traitement dudit scrap par un dernier liquide, on sépare le dernier liquide de traitement et le scrap de façon à ce que la quantité résiduelle de liquide ne dépasse pas 3% en poids et/ou on sèche le scrap par traitement thermique dans un four à une température typiquement comprise entre 60 et 350°C, préférentiellement entre 80 et 300°C et, plus préférentiellement encore, entre 105 et 130 °C.

8. Procédé selon une quelconque des revendications 1 à 7 dans lequel ledit second liquide comprend essentiellement de l'eau, avantageusement le second liquide est de l'eau déionisée,

9. Procédé selon une quelconque des revendications 1 à 7 dans lequel le second liquide est une solution aqueuse dont le pH est
(i) supérieur au pH du premier liquide, si le premier liquide a un pH compris entre 1 et 5, ou
(ii) inférieur au pH du premier liquide, si le premier liquide a un pH compris entre 8 et 13, avantageusement le pH du second liquide étant compris entre le pH du premier liquide et 7.

10. Procédé selon une quelconque des revendications 1 à 9 dans lequel au moins un tensioactif, de préférence un tensioactif non ionique est ajouté dans le second liquide.

11. Procédé selon une quelconque des revendications 1 à 10 dans lequel les opérations de traitement du scrap sont réalisées en continu et les liquides de traitement circulent en flux opposé à celui du scrap.

12. Procédé selon la revendication 11 dans lequel ledit second liquide alimente ledit premier liquide avec un débit volumique d'au moins 0,1 fois le débit volumique d'alimentation du scrap et préférentiellement compris entre 0,2 et 1 fois, de manière préférée 0,3 et 0,8 fois le débit volumique d'alimentation du scrap et dans lequel la quantité de premier liquide entrainée ne dépasse pas à 50 % en poids de préférence 20% en poids et de manière préférée 10% en poids de la matière transférée entre la première et la seconde opération de traitement.

13. Procédé selon une quelconque des revendication 1 à 12 dans lequel ledit scrap est en alliage 2xxx de type Al-Li de préférence choisi parmi au moins un de AA2050, AA2055, AA2060, AA2065, AA2070, AA2076, AA2090, AA2091, AA2094, AA2095, AA2097, AA2098, AA2099, AA2195, AA2196, AA2197, AA2198, AA2199, AA2295, AA2296, AA2297, AA2397.

14. Procédé selon une quelconque des revendications 1 à 13 dans lequel la part de métal du lingot issue de la fusion du scrap est au moins égale à 5 % en poids, de préférence au moins égale à 15 % en poids et de manière préférée au moins égale à 25 % en poids.

15. Procédé selon une quelconque des revendications 1 à 14 dans lequel le scrap issu du traitement par le premier et le second liquide est compacté pour être introduit dans un four de fusion à partir duquel est coulé un lingot directement utilisable pour du laminage, du forgeage et/ou du filage.

16. Procédé de fabrication d'un élément de structure aéronautique comprenant, outre les étapes du procédé selon l'une quelconque des revendications 1 à 15, au moins une étape de laminage, filage et/ou forgeage dudit lingot en alliage d'aluminium de la série du scrap utilisé,
ledit élément de structure aéronautique étant choisi parmi les éléments qui composent le fuselage, tels que la peau de fuselage, les raidisseurs ou lisses de fuselage, les cloisons étanches, les cadres de fuselage, les ailes, tels que la peau de voilure, les raidisseurs, les nervures et longerons et l'empennage composé notamment de stabilisateurs horizontaux et verticaux, ainsi que les profilés de plancher, les rails de sièges et les portes.

## Patentansprüche

1. Verfahren zur Herstellung von Barren aus Aluminiumlegierungen unter Verwendung von Aluminiumlegierungsschrott der Serie 2xxx oder 7xxx, bei dem
(i) Aluminiumlegierungsschrott der Serie 2xxx oder 7xxx beschafft wird;
(ii) das dem Schrott anhaftende Öl optional entfernt wird,
(iii) der Schrott in einem ersten Aufbereitungsschritt mit einer ersten Flüssigkeit bei einer Temperatur von mindestens 10 °C behandelt wird, wobei die erste Flüssigkeit eine wässrige Lösung mit einem pH-Wert von 1 bis 5 oder 8 bis 13 ist,
(iv) die erste Flüssigkeit von dem so behandelten Schrott getrennt wird,
(v) mindestens ein zweiter Aufbereitungsschritt des Schrotts mit einer zweiten Flüssigkeit durchgeführt wird,
(vi) die zweite Flüssigkeit von dem so behandelten Schrott getrennt wird,
(vii) der somit erhaltenen Schrott eingeschmolzen wird,
(viii) optional eine erste Erstarrung in einer Zwischenrohform vorgenommen und
(ix) ein Aluminiumlegierungsbarren aus der Serie des verwendeten Schrotts gegossen wird.

2. Verfahren nach Anspruch 1, bei dem der pH-Wert der ersten Flüssigkeit zwischen 2 und 4 liegt.

3. Verfahren nach Anspruch 1 oder Anspruch 2, bei dem die erste Flüssigkeit Phosphorsäure enthält.

4. Verfahren nach einem der Ansprüche 1 bis 3, bei dem die erste Flüssigkeit mindestens ein anionisches, grenzflächenaktives Produkt enthält.

5. Verfahren nach Anspruch 4, bei dem das anionische grenzflächenaktive Produkt aus einem estergebundenen Produkt, einem ethergebundenen Produkt und/oder einem amidgebundenen Produkt ausgewählt wird.

6. Verfahren nach einem der Ansprüche 1 bis 5, bei dem während des ersten Aufbereitungsschritts und/oder während des zweiten Aufbereitungsschritts eine US-Behandlung mit einer typischen Frequenz zwischen 10 kHz und 100kHz, vorzugsweise zwischen 15 kHz und 35 kHz durchgeführt wird.

7. Verfahren nach einem der Ansprüche 1 bis 6, bei dem nach dem letzten Aufbereitungsschritt des Schrotts mit einer letzten Flüssigkeit die letzte Aufbereitungsflüssigkeit und der Schrott so getrennt werden, dass die Restmenge an Flüssigkeit 3 Gewichtsprozent nicht übersteigt und/oder der Schrott durch Wärmebehandlung in einem Ofen bei einer typischen Temperatur zwischen 60 und 350 °C, vorzugsweise zwischen 80 und 300 °C, und noch bevorzugter zwischen 105 und 130 °C, getrocknet wird.

8. Verfahren nach einem der Ansprüche 1 bis 7, bei dem die zweite Flüssigkeit im Wesentlichen aus Wasser besteht, wobei die zweite Flüssigkeit vorteilhafterweise deionisiertes Wasser ist.

9. Verfahren nach einem der Ansprüche 1 bis 7, bei dem die zweite Flüssigkeit eine wässrige Lösung mit einem pH-Wert
(i) über dem pH-Wert der ersten Flüssigkeit ist, wenn die erste Flüssigkeit einen pH-Wert zwischen 1 und 5 hat, oder
(ii) unter dem pH-Wert der ersten Flüssigkeit liegt, wenn die erste Flüssigkeit einen pH-Wert zwischen 8 und 13 hat, wobei der pH-Wert der zweiten Flüssigkeit vorteilhafterweise zwischen dem pH-Wert der

10. Verfahren nach einem der Ansprüche 1 bis 9, bei dem der zweiten Flüssigkeit mindestens ein Tensid, vorzugsweise ein anionisches Tensid, zugesetzt wird.

11. Verfahren nach einem der Ansprüche 1 bis 10, bei dem die Aufbereitungsschritte des Schrotts kontinuierlich durchgeführt werden und die Aufbereitungsflüssigkeiten entgegen dem Schrottstrom zirkulieren.

12. Verfahren nach Anspruch 11, bei dem die zweite Flüssigkeit der ersten Flüssigkeit mit einem Volumenstrom mit mindestens dem 0,1-fachen des Schrottzuführstroms und vorzugsweise mit dem 0,2- bis 1-fachen, vorzugsweise aber mit dem 0,3- bis 0,8-fachen des Schrottzuführstroms zugesetzt wird und bei dem die Menge der geförderten ersten Flüssigkeit 50 Gewichtsprozent, vorzugsweise 20 Gewichtsprozent, vorzugsweise aber 10 Gewichtsprozent des zwischen dem ersten und zweiten Aufbereitungsschritt geförderten Materials nicht übersteigt.

13. Verfahren nach einem der Ansprüche 1 bis 12, bei dem der Schrott eine Al-Li-2xxx-Legierung ist, die vorzugsweise aus mindestens einer der folgenden Legierungen: AA2050, AA2055, AA2060, AA2065, AA2070, AA2076, AA2090, AA2091, AA2094, AA2095, AA2097, AA2098, AA2099, AA2195, AA2196, AA2197, AA2198, AA2199, AA2295, AA2296, AA2297, AA2397 ausgewählt wird.

14. Verfahren nach einem der Ansprüche 1 bis 13, bei dem der Metallgehalt des aus der Schrottschmelze resultierenden Barrens mindestens 5 Gewichtsprozent, vorzugsweise mindestens 15 Gewichtsprozent, vorzugsweise aber mindestens 25 Gewichtsprozent beträgt.

15. Verfahren nach einem der Ansprüche 1 bis 14, bei dem der Schrott aus der Aufbereitung mit der ersten und zweiten Flüssigkeit verdichtet wird, um in einen Schmelzofen eingebracht zu werden, und aus dem dann ein Barren gegossen wird, der direkt zum Walzen, Schmieden und/oder Strangpressen verwendet werden kann.

16. Verfahren zur Herstellung eines Bauteils für die Luft- und Raumfahrt, das, zusätzlich zu den Schritten des Verfahrens nach einem der Ansprüche 1 bis 15, mindestens einen Walz-, Strangpress- und/oder Schmiedeschritt des Aluminiumlegierungsbarrens der verwendeten Schrottserie umfasst,
wobei das Strukturelement für die Luft- und Raumfahrt eines der Elemente ist, die den Rumpf bilden, wie Rumpfaußenhaut, Rumpfversteifungen oder Rumpflängsteile, wasserdichte Schotten, Rumpfrahmen, Flügel, wie Flügelaußenhaut, Versteifungen, Rippen und Längsträger und Leitwerk, das insbesondere aus horizontalen und vertikalen Stabilisatoren besteht, sowie Bodenprofile, Sitzschienen und Türen.

## Claims

1. A method of manufacturing aluminium alloy ingots using 2xxx or 7xxx series aluminium alloy scrap in which
(i) 2xxx or 7xxx series aluminium alloy scrap is procured;
(ii) optionally, oil present on the scrap is separated out,
(iii) a first treatment operation of said scrap is carried out with a first liquid at a temperature of at least 10° C, said first liquid being an aqueous solution of pH 1 to 5 or 8 to 13,
(iv) the first liquid and the scrap so treated are separated,
(v) at least a second treatment operation of said scrap is carried out with a second liquid,
(vi) the second liquid and the scrap so treated are separated,
(vii) said scrap so obtained is melted,
(viii) optionally, a first solidification is carried out in an intermediate raw form,
(ix) an aluminium alloy ingot of the scrap series used is cast.

2. Method according to claim 1, wherein the pH of said first liquid is between 2 and 4.

3. Method according to claim 1 or claim 2 wherein said first liquid contains phosphoric acid.

4. Method according to any one of claims 1 to 3, wherein said first liquid comprises at least one nonionic surfactant.

5. Method according to claim 4 wherein said nonionic surfactant is selected from an ester bonded product, an ether bonded product, and/or an amide bonded product.

6. Method according to any one of claims 1 to 5 wherein a treatment with ultrasound at a frequency typically between 10 kHz and 100 kHz and preferably between 15 kHz and 35 kHz is performed during said first treatment operation and/or during said second treatment operation.

7. Method according to any one of claims 1 to 6, in which, after the final treating operation of said scrap with a final liquid, the final treatment liquid and the scrap are separated so that the residual amount of liquid does not exceed 3% by weight and/or the scrap is dried by heat treatment in a furnace at a temperature typically between 60 and 350° C, preferably between 80 and 300° C and, more preferably, between 105 and 130° C.

8. Method according to any one of claims 1 to 7 wherein said second liquid essentially comprises water; advantageously the second liquid is deionized water,

9. Method according to any one of claims 1 to 7 wherein the second liquid is an aqueous solution whose pH is
(i) greater than the pH of the first liquid, if the first liquid has a pH of between 1 and 5, or
(ii) lower than the pH of the first liquid, if the first liquid has a pH of between 8 and 13, advantageously the pH of the second liquid being between the pH of the first liquid and 7.

10. Method according to any one of claims 1 to 9 wherein at least one surfactant, preferably a nonionic surfactant, is added to the second liquid.

11. Method according to any one of claims 1 to 10 wherein the scrap processing operations are carried out continuously and the treatment liquids flow in the opposite direction to that of the scrap.

12. Method according to claim 11 wherein said second liquid feeds said first liquid with a flow rate by volume of at least 0.1 times the feed rate of the scrap and preferably between 0.2 and 1 times, preferably 0.3 and 0.8 times the feed rate of the scrap and in which the amount of first liquid entrained does not exceed 50% by weight, preferably 20% by weight and ideally 10% by weight of the material transferred between the first and the second treatment operation.

13. Method according to any one of claims 1 to 12 wherein said scrap is a 2xxx Al-Li alloy preferably selected from at least one of AA2050, AA2055, AA2060, AA2065, AA2070, AA2076, AA2090, AA2091, AA2094, AA2095, AA2097, AA2098, AA2099, AA2195, AA2196, AA2197, AA2198, AA2199, AA2295, AA2296, AA2297, AA2397.

14. Method according to any one of claims 1 to 13, in which the metal portion of the ingot resulting from melting the scrap is at least 5% by weight, preferably at least 15% by weight and ideally at least 25% by weight.

15. Method according to any of claims 1 to 14 wherein the scrap from the treatment with the first and second liquids is compacted to be introduced into a melting furnace from which a directly usable ingot is cast for rolling, forging and/or extrusion.

16. Method of manufacturing an aeronautical structural element comprising, in addition to the steps of the method according to any one of claims 1 to 15,
at least one step involving rolling, extrusion and/or forging of said aluminium alloy ingot of the scrap series used,
said aeronautical structural element being chosen from the elements that make up the fuselage such as the fuselage skin, stiffeners or stringers, bulkheads and circumferential frames, wings such as the wing skin, stiffeners, ribs and spars, and the tail unit, which is made up of horizontal and vertical stabilizers, and floor beams, seat tracks and doors.
